# EUROPÄISCHE PATENTSCHRIFT

(11) **EP 4 159 334 B1**
(45) Veröffentlichungstag und Bekanntmachung des Hinweises auf die Patenterteilung: **01.11.2023**
(21) Anmeldenummer: 21200082.2
(22) Anmeldetag: 30.09.2021
(51) Int. Cl.: B09B 3/70

(54) **VERFAHREN ZUR REINIGUNG VON MIT CALCIUMSULFAT BELASTETEN BÖDEN**
METHOD FOR PURIFYING SOILS POLLUTED WITH CALCIUM SULPHATE
PROCÉDÉ DE NETTOYAGE DES SOLS CONTAMINÉS AU SULFATE DE CALCIUM

(43) Veröffentlichungstag der Anmeldung: 05.04.2023
(73) Patentinhaber: GBAV Gesellschaft für Boden- und Abfallverwertung mbH, 12347 Berlin (DE)
(72) Erfinder: Schmidt, Andreas, 15711 Königs Wusterhausen (DE)
(74) Vertreter: Cohausz & Florack

(56) Entgegenhaltungen:
- DE-A1-102017 211 730

## Beschreibung

Die Erfindung betrifft ein Verfahren zur Reinigung von mit Calciumsulfat belasteten Böden, bei dem mit Calciumsulfat belasteter Boden in einer Bodenwaschanlage behandelt und zumindest einem Teil des Bodens Natriumcarbonat zugegeben wird, und bei dem Natriumsulfat, das sich gemäß der chemischen Reaktion CaSO₄ + Na₂CO₃ → CaCO₃ + Na₂SO₄ während einer Einwirkzeit gebildet hat, durch Spülen und Entwässern des mit Natriumcarbonat behandelten Bodens abgetrennt wird.

Calciumsulfat (CaSO₄) besitzt eine relativ geringe Wasserlöslichkeit von ca. 2 g/l. Das Reaktionsprodukt Natriumsulfat (Na₂SO₄) besitzt dagegen mit ca. 170 g/l bei einer Temperatur von 20°C eine um fast zwei Zehnerpotenzen höhere Wasserlöslichkeit als Calciumsulfat.

Durch anthropogenen Einfluss sind Böden häufig mit Calciumsulfat belastet. Dabei handelt es sich beispielsweise um Böden, die gipshaltigen Bauschutt enthalten. Einen hohen Calciumsulfat-Gehalt aufweisende Böden stellen insbesondere in Gebieten der Trinkwasserversorgung ein Problem dar. Sulfat ist zwar als Mineralstoff in geringen Mengen gesund, jedoch kann eine Sulfat-Konzentration im Trinkwasser bereits ab einer Menge von 500 mg/l zu Durchfallerkrankungen führen. Des Weiteren kann Trinkwasser geschmacklich ab einem Sulfat-Gehalt von 300 mg/l eine unangenehme, bitter schmeckende Note annehmen. Dies entspricht nicht einer Trinkwasserqualitätsforderung, wonach Trinkwasser geschmacklich rein und anregend sein soll. Zudem wirkt eine hohe Konzentration von Sulfat im Trinkwasser korrosiv. Korrosion in Trinkwasserleitungen ist problematisch, weil Rostbefall eine Wachstumsstätte für Bakterien darstellt und gegebenenfalls giftige Schwermetalle wie Blei, Zink und Kupfer freisetzen kann. Es wird daher in Gebieten der Trinkwasserversorgung mitunter die Einhaltung eines Sulfat-Grenzwertes von 150 mg/l im Eluat verlangt.

In Deutschland ist selbst für eine Ablagerung auf einer DK-0 Deponie, d. h. einer Deponie für gering belastete mineralische Abfälle, ein maximaler Sulfat-Grenzwert von 100 mg/l im Eluat einzuhalten. Ein Arbeitsgremium der deutschen Umweltministerkonferenz, nämlich die Bund-/Länderarbeitsgemeinschaft Abfall (LAGA), hat Anforderungen an die stoffliche Verwertung mineralischer Reststoffe und Abfälle formuliert. Je nach Schadstofflast wird das Material in eine der LAGA-Einbauklässen eingestuft, welche die Möglichkeit zur weiteren Verwendung des Materials vorgeben. Für eine uneingeschränkte Verwertung gemäß LAGA-Zuordnungswert Z0 ist ein Sulfat-Grenzwert von 20 mg/l im Eluat einzuhalten. Für einen eingeschränkten offenen Deponieeinbau gemäß LAGA-Zuordnungswert Z1.2 beträgt der im Eluat einzuhaltende Sulfat-Grenzwert 50 mg/l.

Für die Reinigung kontaminierter Böden existieren zahlreiche Verfahren, deren Art von den jeweiligen Kontaminanten abhängt. Enthält der zu reinigende Boden einen oder mehrere wasserlösliche Kontaminanten, so werden für die Reinigung des Bodens üblicherweise Bodenwaschverfahren angewendet. Wie oben bereits erwähnt, besitzt Calciumsulfat (CaSO₄) allerdings eine relativ geringe Wasserlöslichkeit von ca. 2g/l. Da sich Calciumsulfat nur bis zur Löslichkeitsgrenze im Waschwasser löst und aus diesem nur relativ aufwendig entfernt werden kann, lassen sich mit Calciumsulfat belastete Böden nur sehr aufwendig mittels Bodenwaschverfahren reinigen. Um einen Sulfat-Grenzwert von 150 mg/l, insbesondere von 50 mg/l oder gar 20 mg/l im Eluat einzuhalten, wäre es bei einer herkömmlichen Bodenwäsche unerlässlich, das Wasser-Feststoff-Verhältnis bei der Bodenwäsche derart zu erhöhen, dass eine Reinigung aus wirtschaftlicher Sicht nicht sinnvoll wäre. Es wären hohe Wassermengen mit relativ geringer Sulfatkonzentration zu behandeln. Insbesondere wäre es dabei erforderlich, die durch die Bodenwäsche mit Sulfat aufgesalzenen, relativ großen Prozesswassermengen durch Ionenaustausch, Umkehrosmose und/oder biologische Verfahren zu reinigen, um dann weitere Sulfationen in Lösung zu bringen. Dies wäre allerdings sehr aufwendig.

Ein Verfahren der eingangs genannten Art wurde bereits in einer früheren Patentanmeldung der Anmelderin vorgeschlagen. Die frühere Patentanmeldung wurde am 7. Oktober 2004 mit der DE 103 12 803 A1 offengelegt. Das dort offenbarte Verfahren zur Reinigung von mit Calciumsulfat belasteten Böden umfasst folgende Verfahrensschritte: Zugeben von Natriumcarbonat in fester und/oder gelöster Form zu dem mit Calciumsulfat belasteten Boden, und Abtrennen von Natriumsulfat, das sich gemäß der Reaktion CaSO₄ + Na₂CO₃ → CaCO₃ + Na₂SO₄ während einer Einwirkzeit gebildet hat, durch Spülen und Entwässern des mit Natriumcarbonat behandelten Bodens. Eine Ausgestaltung des Verfahrens besteht darin, dass der mit Calciumsulfat belastete Boden in einer Bodenwaschanlage behandelt wird, wobei dem Boden das Natriumcarbonat in fester und/oder gelöster Form vor und/oder während der Behandlung in der Bodenwaschanlage zugegeben wird. Die in der früheren Patentanmeldung beschriebenen Ausführungsbeispiele des Verfahrens beinhalten jeweils folgende Behandlungsschritte: Aufschütten des sulfatbelasteten Bodens zu einem Haufwerk bzw. Fließbett; Besprühen des Haufwerkes/Fließbettes mit einer 20%igen Sodalösung; der Sodalösung wird genügend Einwirkzeit gegeben, um das Haufwerk vollständig zu durchdringen und ihre Aufschlusswirkung, bei der die Reaktion CaSO₄ + Na₂CO₃ → CaCO₃ + Na₂SO₄ abläuft, zu entfalten; und Abtrennen des Natriumsulfats durch Entwässern und/oder Spülen des Haufwerkes/Fließbettes mit Stadt- oder Prozesswasser.

Die DE 10 2017 211 730 A1 beschreibt ein Verfahren zur Calciumsulfatentfernung aus Calciumsulfat-haltigem Bauschutt, umfassend die Schritte: a) Einwirken von Ammoniumcarbonat und/oder Ammoniumbicarbonat auf den Calciumssulfat-haltigen Bauschutt in einem wässrigen Medium, sodass das Calciumsulfat in Calciumcarbonat umgewandelt wird, und b) Abtrennen des wässrigen Mediums, wobei das wässrige Medium Ammoniumsulfat enthält. Die in der DE 10 2017 211 730 A1 angegebenen Ausführungsbeispiele sind allesamt Beispiele im Labormaßstab unter Verwendung eines Schüttelkolbens und einer Schüttelplatte.

Das in der DE 103 12 803 A1 offenbarte Verfahren wurde seitens der Anmelderin im Rahmen umfangreicher Untersuchungen zur Sulfatabreicherung (Sulfatverringerung) lediglich im Labormaßstab durchgeführt. Obwohl die Untersuchungsergebnisse vielversprechend waren, wurde seitens der Anmelderin aber bislang kein Weg gefunden, um das Verfahren wirtschaftlich günstig zu verwirklichen.

Davon ausgehend liegt der vorliegenden Erfindung die Aufgabe zugrunde, einen Weg zu einer effizienten Verwirklichung eines Verfahrens der eingangs genannten Art aufzuzeigen.

Gelöst wird diese Aufgabe durch ein Verfahren mit den in Anspruch 1 angegebenen Merkmalen. Vorteilhafte Ausgestaltungen des erfindungsgemäßen Verfahrens sind in den abhängigen Ansprüchen angegeben.

Das erfindungsgemäße Verfahren zur Reinigung von mit Calciumsulfat belasteten Böden basiert auf dem oben genannten Verfahren, bei dem mit Calciumsulfat belasteter Boden in einer Bodenwaschanlage behandelt und zumindest einem Teil des Bodens Natriumcarbonat zugegeben wird, und bei dem Natriumsulfat, das sich gemäß der chemischen Reaktion CaSO₄ + Na₂CO₃ → CaCO₃ + Na₂SO₄
während einer Einwirkzeit gebildet hat, durch Spülen und Entwässern des mit Natriumcarbonat behandelten Bodens abgetrennt wird. Das erfindungsgemäße Verfahren ist dadurch gekennzeichnet, dass der mit Natriumcarbonat behandelte Boden in mindestens einen schachtartigen, eine untere Öffnung mit Verschluss aufweisenden Speicher, vorzugsweise Silo, eingebracht und dort bis zu einer vorgegebenen oder vorgebbaren Füllmenge gesammelt wird, wobei der Speicher eine Entwässerungseinrichtung aufweist, die mit einer Auffangeinrichtung zum Auffangen von mittels der Entwässerungseinrichtung abgetrenntem Spülwasser verbunden ist, wobei dem mit Natriumcarbonat behandelten, im Speicher gesammelten Boden Spülwasser zugegeben wird, wobei zumindest ein Teil des Spülwassers mit darin gelöstem Natriumsulfat mittels der Entwässerungseinrichtung von dem im Speicher gesammelten Boden abgetrennt und in die Auffangeinrichtung abgeleitet wird, und wobei der gespülte und entwässerte Boden aus dem Speicher an dessen unterer Öffnung entnommen wird.

Anders ausgedrückt umfasst das erfindungsgemäße Verfahren zur Reinigung von mit Calciumsulfat belasteten Böden die Schritte:
- Behandeln von mit Calciumsulfat belastetem Boden in einer Bodenwaschanlage (Bodenwäsche);
- Zugeben von Natriumcarbonat zu mindestens einem Teil des mit Calciumsulfat belasteten Bodens;
- Einbringen des mit Natriumcarbonat behandelten Bodens in mindestens einen schachtartigen, eine untere Öffnung mit Verschluss aufweisenden Speicher, vorzugsweise Silo, wobei der Speicher eine Entwässerungseinrichtung aufweist, die mit einer Auffangeinrichtung zum Auffangen von mittels der Entwässerungseinrichtung abgetrenntem Spülwasser verbunden ist;
- Sammeln des eingebrachten Bodens in dem Speicher bis zu einer vorgegebenen oder vorgebbaren Füllmenge;
- Abtrennen von Natriumsulfat, das sich gemäß der chemischen Reaktion CaSO₄ + Na₂CO₃ → CaCO₃ + Na₂SO₄ während einer Einwirkzeit gebildet hat, durch Spülen und Entwässern des mit Natriumcarbonat behandelten Bodens, indem dem mit Natriumcarbonat behandelten, im Speicher gesammelten Boden Spülwasser zugegeben wird, wobei zumindest ein Teil des Spülwassers mit darin gelöstem Natriumsulfat mittels der Entwässerungseinrichtung von dem im Speicher gesammelten Boden abgetrennt und in die Auffangeinrichtung abgeleitet wird; und
- Entnehmen des gespülten und entwässerten Bodens aus dem Speicher an dessen unterer Öffnung.

In dem Speicher, vorzugsweise Silo, können somit die Verfahrensschritte chemische Umwandlung von Calciumsulfat gemäß der chemischen Reaktion CaSO₄ + Na₂CO₃ → CaCO₃ + Na₂SO₄ und anschließendes Ausspülen des leicht löslichen Reaktionsproduktes Na₂SO₄ in einem definierten Prozessraum stattfinden. Das Spülwasser durchläuft die stehende Bodenmaterialsäule im Speicher langsam der Schwerkraft folgend von oben nach unten und löst dabei das Natriumsulfat aus der Bodenmaterialmatrix. Sodann wird die Spülwasserflüssigkeit in dem Speicher mittels der Entwässerungseinrichtung abgetrennt, in einen Filtrat-Behälter abgeleitet und anschließend vorzugsweise in eine Prozesswasserreinigungsanlage gefördert, beispielsweise gepumpt.

Ein großtechnischer Versuch seitens der Anmelderin hat ergeben, dass sich das erfindungsmäße Verfahren erfolgreich und effizient verwirklichen lässt. Der Versuch hat insbesondere ergeben, dass das erfindungsgemäße Verfahren zuverlässig und über einen weiten Kontaminationsbereich anwendbar ist. Das erfindungsgemäße Verfahren lässt sich kostengünstig und im Wesentlichen abwasserfrei betreiben.

Die Zugabe von Natriumcarbonat (Na₂CO₃) zu dem zu reinigenden, mit Calciumsulfat belasteten Boden erfolgt vorzugsweise in Abhängigkeit von der Sulfatbelastung, wozu beispielsweise eine oder mehrere Proben des zu reinigenden Bodens oder Bodenanteils analysiert werden. Die Messung des Sulfatgehalts der Bodenprobe kann gemäß DIN EN ISO 11 585 durchgeführt werden. Des Weiteren wird die Probe des mit Calciumsulfat belasteten Bodens beispielsweise gemäß DIN 38 414 - S4 in Lösung gebracht. Die Messungen des Sulfatgehalts im Eluat erfolgen dann beispielsweise gemäß DIN EN ISO 10304-1 : 2009-07 und/oder gemäß DIN EN ISO 11885 : 2009-09.

Eine bevorzugte Ausgestaltung des erfindungsgemäßen Verfahrens sieht vor, dass dem mit Calciumsulfat belasteten Boden je Mol Calciumsulfat mindestens 1 Mol Natriumcarbonat zugegeben wird. Auf diese Weise kann eine möglichst vollständige Umwandlung des schwerlöslichen Calciumsulfats in das leichtlösliche Natriumsulfat erreicht werden. Diese äquimolare Zudosierung von Natriumcarbonat ist insbesondere für die Unterschreitung des oben genannten Grenzwertes von 150 mg/l vorteilhaft. Es liegt allerdings auch im Rahmen der Erfindung, wesentlich weniger Natriumcarbonat zuzudosieren als es bei einer äquimolaren Zudosierung der Fall wäre, und zwar z. B. dann, wenn der zulässige Sulfat-Grenzwert höher als 150 mg/l liegt.

Vorzugsweise wird Natriumcarbonat dem mit Calciumsulfat belasteten Boden oder einem Teil dieses Bodens zugegeben, nachdem der Boden in der Bodenwaschanlage gewaschen wurde. Die Natriumcarbonat-Zugabe kann beispielsweise am Ende des Waschprozesses erfolgen.

Bei dem mit Calciumsulfat belasteten Boden oder dem Teil dieses Bodens, der erfindungsgemäß durch Zugabe von Natriumcarbonat behandelt wird, kann es sich beispielsweise um Boden mit einer maximalen Korngröße von ca. 100 mm handeln. Vorzugweise ist bzw. wird der mit Calciumsulfat belastete Boden derart sortiert oder klassiert, dass der Boden oder der Teil dieses Bodens, der erfindungsgemäß behandelt wird, eine maximale Korngröße kleiner oder gleich 80 mm, besonders bevorzugt kleiner oder gleich 5 mm, beispielsweise kleiner oder gleich 2 mm aufweist. Versuche seitens der Anmelderin haben ergeben, dass sich mit Calciumsulfat belasteter Boden dieser Korngrößen bzw. dieser Korngrößenbereiche effektiv reinigen lässt, so dass ein Sulfat-Grenzwert von 150 mg/l im Eluat zuverlässig eingehalten oder auch unterschritten werden kann. Der Boden oder der Teil dieses Bodens, der erfindungsgemäß behandelt wird und eine maximale Korngröße kleiner oder gleich 5 mm, beispielsweise kleiner oder gleich 2 mm aufweist, kann auch als Sand oder Sandboden bezeichnet werden.

Eine vorteilhafte Ausgestaltung des erfindungsgemäßen Verfahrens ist dadurch gekennzeichnet, dass das Natriumcarbonat dem mit Calciumsulfat belasteten Boden oder dem Teil dieses Bodens im Wesentlichen in fester Form, vorzugsweise in Pulverform zugegeben wird, wobei die Natriumcarbonat-Zugabe erfolgt, nachdem der Boden in der Bodenwaschanlage gewaschen wurde, und wobei der Boden bei der Natriumcarbonat-Zugabe einen Wasser- oder Feuchtegehalt im Bereich von 10 bis 18 %, vorzugsweise im Bereich von 14 bis 16 % aufweist.

Der hier relevante Wassergehalt w einer Bodenprobe kann nach DIN 18121 bestimmt werden und wird als Verhältnis des Massenverlustes beim Trocknen m_{w} bezogen auf die verbleibende Trockenmasse m_{d} nach w = m_{w} / m_{d} ermittelt.

Die Zugabe des Natriumcarbonats in fester Form ist insgesamt betrachtet kostengünstiger als eine Zugabe in gelöster Form. Denn die Herstellung einer Sodalösung am Ort einer Bodenwaschanlage oder auch extern ist aufwendig. Ferner ist der Transport von Natriumcarbonat in fester Form zur Verwendung am Ort einer Bodenwaschanlage kostengünstiger als der Transport einer extern hergestellten Sodalösung zum Ort einer Bodenwaschanlage. Des Weiteren ist ein Wasser- oder Feuchtegehalt im Bereich von 12 bis 18 %, vorzugsweise im Bereich von 14 bis 16 %, bei einem von Calciumsulfat zu reinigenden Boden günstig für einen Transport des Bodens, insbesondere für einen kostengünstigen Förderbandtransport des Bodens in Verbindung mit der Bodenwaschanlage.

Nach einer weiteren vorteilhaften Ausgestaltung der Erfindung wird der Boden (Bodenanteil) während und/oder nach der Natriumcarbonat-Zugabe mittels eines Fördermittels, vorzugsweise eines Stetigförderers, besonders bevorzugt eines Gurtförderers transportiert, wobei der Boden nach der Natriumcarbonat-Zugabe auf dem Transportweg zu dem Speicher mindestens einmal auf ein nachfolgendes Fördermittel übergeben, vorzugsweise abgeworfen wird. Durch diese Ausgestaltung lässt sich auf kostengünstige Weise eine gute Vermischung, vorzugsweise möglichst gleichmäßige Vermischung von Boden und Natriumcarbonat erreichen. Vorzugsweise wird der Boden nach der Natriumcarbonat-Zugabe mindestens zweimal, besonders bevorzugt mindestens dreimal auf ein nachfolgendes Fördermittel, beispielsweise auf Stetigförderer, insbesondere Gurtförderer übergeben, vorzugsweise abgeworfen. Für eine möglichst gleichmäßige Vermischung von Boden und Natriumcarbonat ist in diesem Zusammenhang insbesondere vorteilhaft, wenn für den Transport des gewaschenen, mit Natriumcarbonat behandelten bzw. beaufschlagten Bodens zu dem Speicher ein Steilgurtförderer, vorzugsweise ein Wellkanten-Gurtförderer oder dergleichen als Fördermittel verwendet wird, dessen Gurt mit einem maximalen Neigungswinkel beispielsweise im Bereich von 40° bis 90°, vorzugsweise im Bereich von 50° bis 80° gegenüber der Horizontalen ausgerichtet ist. In den durch die Wellkanten und die Mitnehmerprofile (Stollen) begrenzten Aufnahmefächern des vorzugsweise steil verlaufenden Wellkanten-Gurtförderers erfährt das damit transportierte Fördergut während des Transports Rutsch- und/oder Umwälzbewegungen, die zu einer wirksamen Vermischung von Boden und Natriumcarbonat beitragen.

Das Einbringen des mit Natriumcarbonat behandelten Bodens oder Bodenanteils in den mindestens einen schachtartigen Speicher erfolgt vorzugsweise von oben. Der behandelte Boden bzw. Bodenanteil wird hierzu von oben in den Speicher, vorzugsweise Silo, abgeworfen und/oder geschüttet. Durch diese Art des freifallenden Einbringens erfolgt eine vorteilhafte Vermischung von Boden und Natriumcarbonat.

Eine weitere vorteilhafte Ausgestaltung der Erfindung sieht vor, dass dem Boden nachdem er in der Bodenwaschanlage gewaschen wurde, während oder nach der Natriumcarbonat-Zugabe auf dem Transportweg zu dem Speicher zusätzliches Wasser (Zusatzwasser) zugegeben wird, so dass der Boden nach Zugabe des zusätzlichen Wassers einen Wassergehalt im Bereich von 14 bis 20 %, vorzugsweise im Bereich von 16 bis 18 % aufweist. Auf diese Weise lässt sich ein Auftreten von Natriumcarbonat-Staub bei der Natriumcarbonat-Zugabe zu dem mit Calciumsulfat belasteten Boden oder Bodenanteil weitgehend oder gänzlich unterbinden, ohne die Transportfähigkeit des Bodens auf einem Gurtförderer durch ungünstig hohen Wassergehalt des Bodens zu verlieren. Zudem trägt besagte Zugabe von zusätzlichem Wasser zu einer gleichmäßigeren Vermischung von Natriumcarbonat und zu reinigendem, mit Calciumsulfat belasteten Boden bei. Die Zugabe des zusätzlichen Wassers erfolgt vorzugsweise in der Weise, dass das zusätzliche Wasser auf den zu reinigendem, mit Calciumsulfat belasteten Boden während oder nach der Natriumcarbonat-Zugabe aufgesprüht oder aufgebraust wird.

Erfindungsgemäß wird der mit Natriumcarbonat behandelte Boden oder Bodenanteil in mindestens einen schachtartigen, eine untere Öffnung mit Verschluss aufweisenden Speicher, vorzugsweise Silo, eingebracht, wobei der Speicher eine Entwässerungseinrichtung aufweist, die mit einer Auffangeinrichtung zum Auffangen von mittels der Entwässerungseinrichtung abgetrenntem Spülwasser verbunden ist. Nach einer gewissen Einwirkzeit, die im Falle eines Sulfat-Grenzwertes von 150 mg/l vorzugsweise mindestens 5 Stunden beträgt, wird der mit Natriumcarbonat (Soda) beaufschlagte Boden oder Bodenanteil dann mit Wasser gespült und das Spülabwasser aufgefangen. Wenn der zulässige Sulfat-Grenzwert höher als 150 mg/l liegt, kann gegebenenfalls auch mit einer kürzeren Einwirkzeit als 5 Stunden gearbeitet werden.

Nach einer weiteren vorteilhaften Ausgestaltung der Erfindung wird der mit Natriumcarbonat behandelte Boden in dem mindestens einen Speicher derart gesammelt, dass der gesammelte Boden bei Erreichen der vorgegebenen oder vorgebbaren Füllmenge oberseitig einen Schüttkegel bildet, wobei das Spülwasser dem in dem Speicher gesammelten Boden in einer Menge und/oder mit einem Volumenstrom zugegeben wird, sodass sich zwischen der Innenseite des Speichers und dem Schüttkegel ein von oben zumindest temporär sichtbarer Spülwasserring bildet. Diese Ausgestaltung ist hinsichtlich eines möglichst vollständigen und gleichmäßigen Spülens des in dem Speicher gesammelten, mit Natriumcarbonat behandelten Bodens von Vorteil.

Für eine effektive und möglichst vollständige Entnahme des gespülten und entwässerten Bodens aus dem Speicher ist es günstig, wenn der Speicher gemäß einer weiteren Ausgestaltung der Erfindung aus einem unteren, sich nach unten verjüngenden Abschnitt, der die untere Öffnung mit dem Verschluss des Speichers aufweist, und aus einem oberen Abschnitt, der einen zylindrischen, vorzugsweise kreiszylindrischen Querschnitt aufweist, aufgebaut ist.

Eine weitere vorteilhafte Ausgestaltung der Erfindung sieht vor, dass zum Entwässern des gespülten Bodens ein im Wesentlichen ringförmiges, vorzugsweise konisches oder zylindrisches Sieb verwendet wird, das in einem vertikalen Abstand von maximal 100 cm, vorzugsweise maximal 50 cm oberhalb der unteren Öffnung des Speichers angeordnet ist. Das bedeutet, der verwendete Speicher ist oberhalb seiner unteren Öffnung mit einem derartigen Sieb ausgerüstet. Diese Ausgestaltung ermöglicht eine kostengünstige, ausreichend schnelle und effektive Entwässerung des in dem Speicher befindlichen gespülten Bodens unter Nutzung der Schwerkraft. Zudem ermöglicht diese Ausgestaltung bei guter Entwässerungsleistung eine robuste Ausführung des Speichers, insbesondere im Bereich seines unteren Abschnitts.

In diesem Zusammenhang ist eine weitere Ausgestaltung der Erfindung dadurch gekennzeichnet, dass das Sieb längliche, im Wesentlichen in Fließrichtung des Spülwassers verlaufende Schlitze aufweist, wobei die Schlitze vorzugsweise als Schlitzbrückenstruktur ausgebildet sind. Diese Ausgestaltung bietet den Vorteil, dass das Sieb in Bezug auf zu entwässernde Böden, die einen erheblichen Anteil an kleinen Partikeln mit einer Korngröße von zum Beispiel kleiner oder gleich 2 mm aufweisen, eine lang anhaltende Entwässerungsfunktion bietet, da die in Fließrichtung des Spülwassers verlaufenden Schlitze kaum oder weniger anfällig für ein Zusetzen oder Verstopfen durch kleine Bodenpartikel sind.

Nach einer weiteren vorteilhaften Ausgestaltung der Erfindung werden zum Entwässern des gespülten Bodens Filterrohre verwendet, die im Inneren des Speichers eingebaut sind, sich zumindest entlang eines Teilabschnitts des unteren Abschnitts des Speichers nach oben erstrecken, und abgetrenntes Spülwasser zu einer auf der Außenseite des Speichers angeordnete Sammelleitung abführen. Durch diese Ausgestaltung lässt sich die Entwässerungsleistung erhöhen und die Wassergehaltverteilung in dem im Speicher befindlichen sowie daraus entnommenen Boden vergleichmäßigen.

In diesem Zusammenhang sieht eine weitere Ausgestaltung der Erfindung vor, dass das jeweilige Filterrohr längliche, im Wesentlichen parallel zu seiner Rohrachse verlaufende Schlitze, vorzugsweise in Form einer Schlitzbrückenstruktur aufweist. Diese Ausgestaltung bietet ebenfalls den Vorteil, dass die Filterrohre in Bezug auf zu entwässernde Böden, die einen erheblichen Anteil von kleinen Partikeln mit einer Korngröße von zum Beispiel kleiner oder gleich 2 mm aufweisen, eine lang anhaltende Entwässerungsfunktion bieten, da die in Rohrachse verlaufenden Schlitze wenig anfällig für ein Zusetzen oder Verstopfen durch kleine Bodenpartikel sind.

Eine weitere vorteilhafte Ausgestaltung der Erfindung ist dadurch gekennzeichnet, dass der Verschluss des Speichers als Schieber, vorzugsweise als Flachschieber ausgeführt ist, wobei der Verschluss ein gegenüber der Horizontalen geneigtes Schieberblatt aufweist, das in seiner Schließstellung an einer Abdichtung dichtend anliegt, und wobei oberhalb des Schieberblatts ein Befestigungsrahmen mit einer zusätzlichen Entwässerungseinrichtung angeordnet ist, wobei die zusätzliche Entwässerungseinrichtung vorzugsweise an der tiefsten Stelle einer von der Abdichtung und dem Schieberblatt in dessen Schließstellung begrenzten Gefällefläche angeordnet ist. Hierdurch lässt sich ebenfalls die Entwässerung verbessern und die Wassergehaltverteilung in dem im Speicher befindlichen sowie daraus entnommenen Boden vergleichmäßigen.

Nach einer weiteren Ausgestaltung der Erfindung wird der gespülte und entwässerte Boden an der unteren Öffnung des Speichers mittels eines Dosierförderbandes entnommen. Diese Ausgestaltung ermöglicht eine komfortable Entnahme des erfindungsgemäß behandelten, gereinigten Bodens aus dem Speicher. Insbesondere ermöglicht diese Ausgestaltung einen diskontinuierlichen Abzug von gereinigtem Boden, wie z. B. Sand, aus dem Speicher und somit eine komfortable Beladung aufeinander folgender Schüttgut-Transportmittel, wie z. B. Muldenkipper.

Eine weitere Ausgestaltung des erfindungsgemäßen Verfahrens sieht vor, dass das gelöstes Natriumsulfat enthaltende Spülwasser aus der Auffangeinrichtung in eine Prozesswasserreinigungsanlage geleitet und/oder gepumpt und das dort gereinigte Spülwasser in dem Verfahren, vorzugsweise zum Spülen des mit Natriumcarbonat behandelten Bodens und/oder zur Bodenwäsche weiter verwendet wird. Hierdurch können der Verbrauch von Wasser, z. B. Stadtwasser, bei der Durchführung des Verfahrens und dementsprechend Wasserkosten minimiert werden.

Nach einer weiteren Ausgestaltung des erfindungsgemäßen Verfahrens wird das im Spülwasser gelöste Sulfat des Natriumsulfats durch Zugabe von Bariumchlorid oder Calciumchlorid gefällt und als Bariumsulfat bzw. Calciumsulfat vom Spülwasser abgetrennt. Bariumsulfat ist in Wasser unlöslich und kann zum Beispiel als Füllstoff in Kunststoffen, plastischen Massen, Lacken und Farben, sowie bei der Papierherstellung verwendet werden. Insbesondere lässt sich Bariumsulfat aufgrund der Absorption von Gamma- und Röntgenstrahlung in Strahlenschutzbeton und in der Radiologie verwenden. Eine weitere vorteilhafte Anwendung von Bariumsulfat ist die Verwendung in Bohrspülschlämmen bei Erdbohrungen. Aufgrund der hohen Dichte des Bariumsulfats erhält man Suspensionen, deren Dichte so hoch ist, dass Gesteinsbrocken im Bohrschlamm aufschwimmen, wodurch das Bohrloch frei gespült werden kann.

Alternativ kann zum Ausfällen des gelösten Sulfats Calciumchlorid (CaCl₂) verwendet werden. Das gelöste Sulfat fällt dann als Gips (CaSO₄) aus. Der auf dies Weise erhaltene Gips kann als Baumaterial genutzt werden.

Eine weitere vorteilhafte Ausgestaltung des erfindungsgemäßen Verfahrens ist dadurch gekennzeichnet, dass mindestens zwei Speicher verwendet werden, die jeweils dem besagten mindestens einen Speicher entsprechen, wobei die Speicher in der Weise verwendet werden, dass einer der Speicher mit Boden aus der Bodenwaschanlage, der mit Calciumsulfat belastet ist und mit Natriumcarbonat behandelt wurde, befüllt wird, während in einem anderen der Speicher Natriumsulfat, das sich während einer Einwirkzeit in dem mit Natriumcarbonat behandelten Boden gebildet hat, durch Spülen und Entwässern des behandelten Bodens abgetrennt wird. Durch diese Ausgestaltung lässt sich ein im Wesentlichen kontinuierlicher Betrieb der Bodenwaschanlage realisieren bzw. erhalten sowie eine hohe Reinigungsleistung hinsichtlich der Reinigung von mit Calciumsulfat belastetem Bodenmaterial erzielen.

Bei einem großtechnischen Versuch seitens der Anmelderin wurden ca. 1.100 t in einer Bodenwaschanlage gewaschener Sand mit einer Ausgangsbelastung von ca. 200 mg/l SO₄ ²⁻ mit ca. 4,9 t Soda auf einem Förderweg in einen schachtförmigen Speicher (Silo) beaufschlagt, vermischt und nach einer Einwirkzeit von ca. 24 Stunden im Speicher anschließend mit ca. 212 m³ Wasser gespült. Das entspricht einer Spülwassermenge von ca. 0,193 m³/t Feststoff. Nach Spülen und Entwässern betrug die SO₄ ²⁻ Konzentration in dem so behandelten Sand nur noch durchschnittlich ca. 25 mg/l. Der Durchschnittwert wurde anhand von 26 Proben ermittelt. Die höchste analysierte SO₄ ²⁻ Konzentration betrug ca. 66 mg/l. Bei ca. 62% des untersuchten erfindungsgemäß behandelten Sandes lag die SO₄ ²⁻ Konzentration sogar unterhalb der Nachweisgrenze von 20 mg/l.

Nachfolgend wird die Erfindung anhand einer Ausführungsbeispiele darstellenden Zeichnung näher erläutert. Es zeigen schematisch:
- Fig. 1a - 1c: eine Bodenwaschanlage mit einer Entwässerungssiloanlage;
- Fig. 2: eine detailliertere Darstellung eines unteren Abschnitts der Entwässerungssiloanlage;
- Fig. 3: ein Diagramm betreffend den Sulfatgehalt im Eluat in Abhängigkeit von der Sodadosiermenge bei einer Einwirkdauer von ca. 24 Stunden; und
- Fig. 4: ein Diagramm betreffend den Sulfatgehalt im Filtrat (Eluat) der Entwässerungssiloanlage in Abhängigkeit von der Filtrationsdauer.

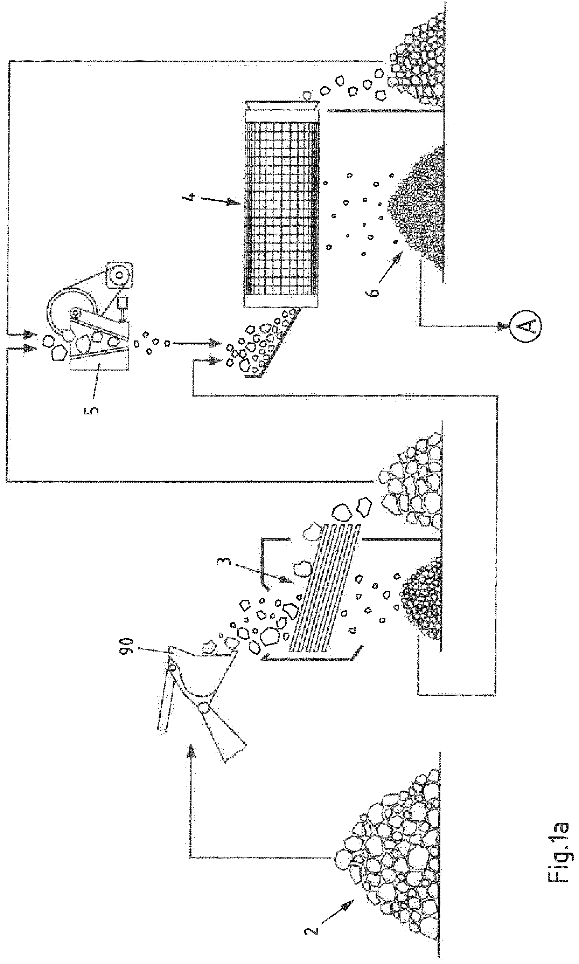

In den Figuren 1a bis 1c ist eine Bodenwaschanlage skizziert, die der Reinigung von kontaminiertem Boden dient. Das Verfahrensprinzip der dargestellten Bodenwaschanlage beruht darauf, die im Boden enthaltenen Schadstoffe in einem kleinen Massenanteil anzureichern, der dann abgetrennt wird. Hierdurch kann der größte Teil des kontaminierten Bodens so gereinigt werden, dass eine Wiederverwendung möglich ist. Das abgetrennte Schadstoffkonzentrat kann entweder für eine Weiterverwendung weiterbehandelt bzw. umgewandelt oder auf geeigneten Deponien entsorgt werden.

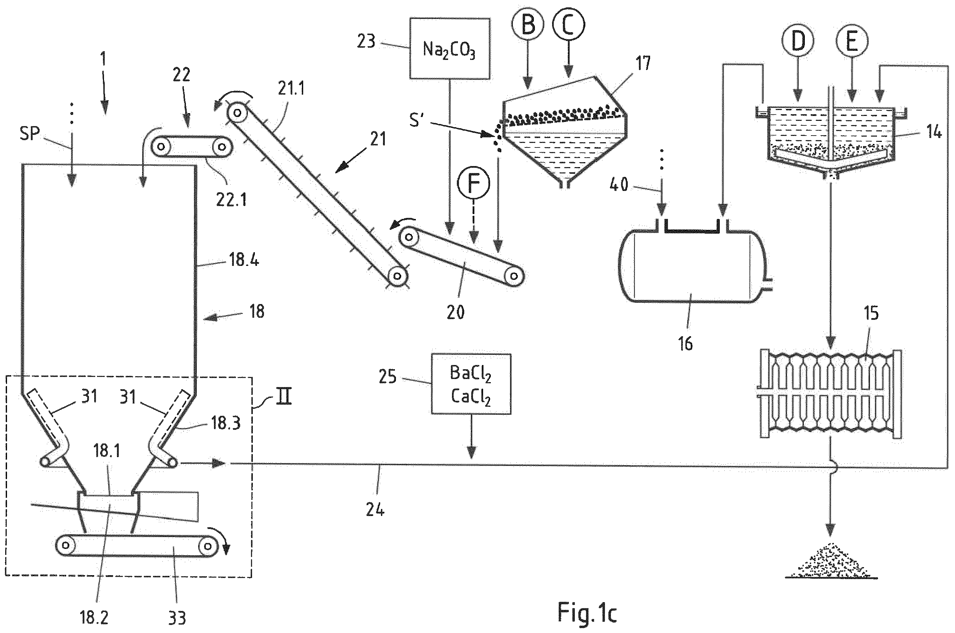

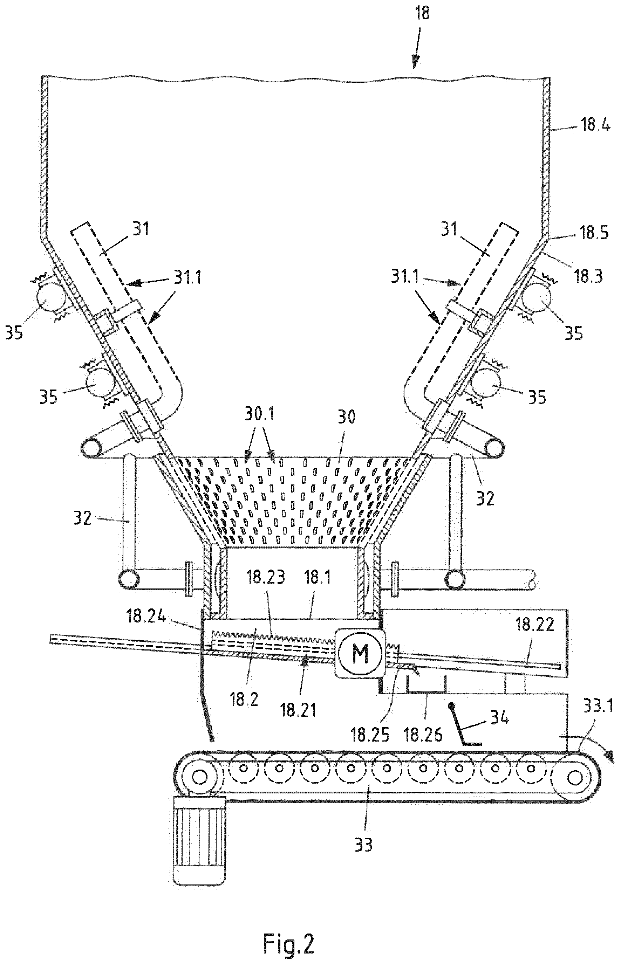

Die Bodenwaschanlage umfasst an ihrem Ende eine Entwässerungssiloanlage 1 (vgl. Figuren 1c und 2). Herkömmliche Bodenwaschanlagen haben an ihrem Ende keine Entwässerungssiloanlage, sondern einen Lagerplatz zum Sammeln von gereinigtem Haufwerk. Der Lagerplatz ist dabei üblicherweise durch vertikale, rechtwinklig zueinander angeordnete Wände begrenzt, die in horizontalem Querschnitt betrachtet ein im Wesentlichen U-förmiges Querschnittsprofil definieren. Ein solcher herkömmlicher Lagerplatz wird auch als Lagerbox bezeichnet.

Der zu reinigende Boden enthält Calciumsulfat als Kontaminaten. Bei dem mit Calciumsulfat belasteten Boden handelt es sich beispielsweise um Bauabfälle oder Boden, der gipshaltige Bauabfälle enthält. Der zu reinigende Boden liegt nach der Anlieferung als Rohhaufwerk 2 vor. Bei Bedarf kann eine Mischung des Röhhaufwerks erfolgen, um das kontaminierte Material zu vergleichmäßigen.

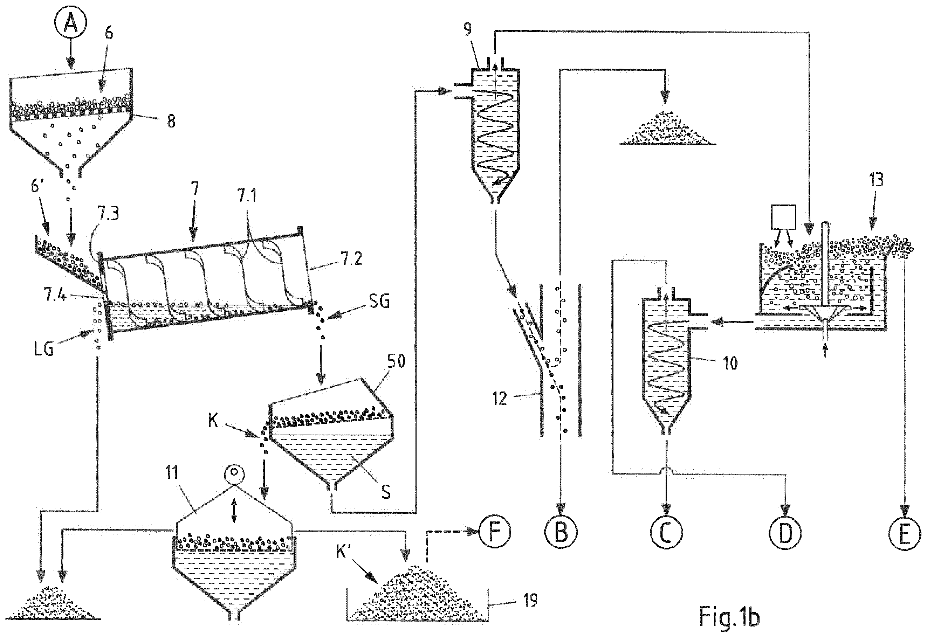

In einer im Wesentlichen trockenmechanischen Aufbereitung, die auch als erste Behandlungsstufe bezeichnet werden kann, werden grobe Störstoffe, wie etwa Dachpappe, Holz und/oder Metallteile, die in Bauabfällen und ausgehobenem Erdreich üblicherweise vorkommen, abgetrennt. Hierzu erfolgt eine Trockenklassierung bei zum Beispiel ca. 100 mm, vorzugsweise ca. 80 mm, mittels eines sogenannten Stangensizers (Stangen- oder Fingersieb) 3 und eines drehend angetriebenen Trommelsiebes 4 (vgl. Fig. 1a). Grobe Bauschuttanteile werden innerhalb dieser trockenmechanischen Behandlungsstufe in einem Brecher 5, vorzugsweise einem Backenbrecher zerkleinert. Das so aufbereitete Material 6 wird anschließend zum Nassaufschluss in eine drehend angetriebene Waschtrommel 7 gefördert (siehe Fig. 1b). Der Übergang von der trockenmechanischen Aufbereitung in Richtung des Nassaufschlusses ist in den Figuren 1a und 1b durch den Pfeil A markiert.

Die Förderung des trockenmechanisch aufbereiteten Materials 6 zu der in Fig. 1b gezeigten Waschtrommel 7 erfolgt vorzugsweise mittels Schaufellader (Radlader). Zum Schutz der dem Nassaufschluss dienenden Anlagenteile der Bodenwaschanlage ist der Waschtrommel 7 ein sogenanntes Schutzsieb 8 vorgeschaltet, da nicht ausgeschlossen werden kann, dass in der Schaufel 90 des Laders noch oder auch grobe Materialstücke vorhanden sind. Das Schutzsieb 8 bewirkt eine Abtrennung von Material, das beispielsweise größer als 80 mm ist, so dass in die Waschtrommel 7 ausschließlich Material kleiner oder gleich ca. 80 mm gelangt.

In der Waschtrommel 7, deren Drehachse zur Horizontalen geneigt ist, erfolgt eine Zugabe von Prozesswasser über eine in die Waschtrommel 7 mündende Prozesswasserleitung (nicht gezeigt). Durch die Trommeldrehung und eingebaute Mischelemente wird die Wasser-Feststoff-Suspension intensiv durchmischt. Miteinander verklebte Bodenpartikel wie Lehmklumpen lösen sich auf. Darin eingebundene, gröbere Leichtstoffpartikel wie solche aus Holz, Kohle oder Teer werden aufgeschlossen. Das Wasser-Feststoff-Verhältnis wird so eingestellt, dass ein wirksamer mechanischer Energieeintrag durch Reibung der Bodenpartikel aneinander entsteht. Hierdurch wird eine intensive Reinigung der Partikeloberflächen erzielt. Mittels der Waschtrommel 7 erfolgt eine Sortierung von Schwergut SG und Leichtgut LG, insbesondere der durch den Waschvorgang aufgeschlossenen gröberen Leichtstoffpartikel. Die Waschtrommel 7 ist mit einer Wendel 7.1 zur Förderung von Schwergut SG zu einer Austragsöffnung 7.2 versehen, die sich an einem Ende der Trommel befindet, das entgegengesetzt zu dem anderen Ende der Trommel liegt, an welchem die Trommel eine Stirnwand 7.3 mit einer Austragsöffnung 7.4 für als Schwimmgut auszutragendes Leichtgut LG aufweist. Die Austragsöffnung 7.4 für das Leichtgut LG ist dabei exzentrisch zur Drehachse der Waschtrommel 7 angeordnet und/oder nicht kreisförmig ausgebildet, so dass sich bei der Rotation der Waschtrommel 7 unter Zulauf von Prozesswasser und Aufgabe des zu waschenden Schüttgutes 6` in die Trommel ein periodischer Austrag von Prozesswasser mit Leichtgut LG an der Austragsöffnung 7.4 für das Leichtgut ergibt. Weitere Details betreffend die Konstruktion und Funktionsweise der Waschtrommel lassen sich der DE 10 2004 008 126 B3 entnehmen.

Das mittels der Waschtrommel 7 abgetrennte Schwergut SG wird nach der Korngröße mittels mindestens eines Vibrationssiebes 50, das zugleich als Entwässerungssieb fungiert, in eine Sandfraktion S und eine Kiesfraktion K geteilt, wobei die Sandfraktion S z. B. eine Korngröße von ca. 0 - 2 mm und die Kiesfraktion K eine Korngröße von ca. 2 - 80 mm aufweist. Die vom Bodenkorn abgelösten Kontaminanten werden im Feinkornanteil angereichert. Das Feinkorn hat eine Partikelgröße von beispielsweise kleiner 15 µm. Diese Fraktion wird vorzugsweise mittels mehrstufig geschalteter Hydrozyklone 9, 10 abgetrennt.

In der zur Wiederverwendung bestimmten Fraktion, deren Partikelgröße beispielsweise größer 15 µm beträgt, verbleiben nach dem Klassieren Schadstoffpartikel von gleicher Größe wie die mineralischen Bodenkörner. Zur Abtrennung von Schadstoffpartikeln mit gleicher Größe werden daher zusätzliche Sortierprozesse durchgeführt.

Die Schadstoffpartikel mit gleicher Größe, wie z. B. solche aus Kohle, Teer, Holz oder anderen leichten Stoffen, werden durch Dichtetrennverfahren aussortiert. Dieses erfolgt für die Kiesfraktion K beispielsweise in einer Setzmaschine 11 und für die Sandfraktion S beispielsweise in einem oder mehreren Aufstromsortierern 12.

Bei geringen Dichteunterschieden und in der Feinfraktion < 150 µm ist der Wirkungsgrad der Dichtetrennverfahren jedoch eher unbefriedigend. Es werden daher vorzugsweise zusätzlich Flotationsverfahren angewandt, die nicht nach der Dichte, sondern nach unterschiedlichen Oberflächeneigenschaften trennen. So können beispielsweise stark mit Teer belastete Materialien durch den Einsatz der Flotationsanlage 13 mit ausreichendem Erfolg gereinigt werden. Die Schwergut-Materialströme aus dem Aufstromsortierer 12 bzw. aus dem der Flotationsanlage 13 folgenden Hydrozyklon 10 sind in den Figuren 1b und 1c durch Pfeile B bzw. C markiert. Dagegen sind der Leichtgut-Materialstrom aus dem Hydrozyklon 10 und der Konzentrat-Überlauf-Materialstrom aus der Flotationsanlage 13 in den Figuren 1b und 1c durch die Pfeile D bzw. E markiert.

Der mittels der Hydrozyklone 9, 10 sowie der Flotationsanlage 13 abgetrennte Feinkornanteil wird beispielsweise in einem Lamellenklärer und/oder Eindicker 14 sedimentiert, eingedickt und anschließend in einer Filterkammerpresse 15 entwässert. In Fig. 1c ist mit 16 ein Prozesswassertank bezeichnet, in den geklärtes Prozesswasser aus dem Eindicker 14 eingeleitet wird. Des Weiteren kann dem Prozesswassertank 16 neues Stadtwasser (Frischwasser) 40 zugegeben werden, um Verluste an Prozesswasser in der Bodenwaschanlage auszugleichen. Die gereinigte Sandfraktion S sowie die gereinigte Kiesfraktion K werden auf Entwässerungssieben 17 bzw. 50 mit Frischwasser (z. B. Stadtwasser) nachgespült und über Förderbänder in Sandsilos 18 bzw. Lagerboxen 19 gefördert.

Um eine Verlagerung oder Verschleppung von Schadstoffen über den Wasserweg zu verhindern, ist die Bodenwaschanlage vorzugsweise mit einer Prozesswasseraufbereitungsstufe ausgerüstet. Der Lamellenklärer und/oder der Eindicker 14 mit einem relativ großen Fassungsvermögen, z. B. von ca. 400 m³ stellt dabei sicher, dass sämtliche im Prozesswasser enthaltenen festen Bestandteile abgetrennt werden. Der Überlauf des Lamellenklärers bzw. Eindickers 14 ist dann nur noch mit den im Prozesswasser gelösten Schadstoffen belastet. Durch Adsorption an Aktivkohle in der Flüssigphase können die gelösten, insbesondere organischen Inhaltsstoffe aus dem Prozesswasser entfernt werden. Gelöste Schwermetall- oder Cyanidverbindungen werden vorzugsweise durch Fällung, Flockung und/oder Sedimentation abgeschieden.

Gemäß einer bevorzugten Ausgestaltung des erfindungsgemäßen Verfahrens wird der in der Bodenwaschanlage gereinigten Sandfraktion, die aufgrund des mindestens einen Vibrations- bzw. Entwässerungssiebes 8 und der nachgeschalteten Hydrozyklone 9, 10 Korngrößen im Bereich von beispielsweise ca. 0,02 mm - 2 mm aufweist und mit Calciumsulfat belastet ist, in Förderrichtung nach einem Entwässerungssieb 17 mit Natriumcarbonat beaufschlagt. Die Natriumcarbonat-Zugabe erfolgt somit nachdem der Sand in der Bodenwaschanlage gewaschen wurde. Das Natriumcarbonat wird dem mit Calciumsulfat belasteten Sand S' vorzugsweise in fester Form, zum Beispiel in Pulverform zugegeben. Bei der Natriumcarbonat-Zugabe hat der Sand S' einen Wasser- oder Feuchtegehalt im Bereich von beispielsweise ca. 10 bis 18 %, vorzugsweise im Bereich von ca. 14 bis 16 %. Der Sand S' wird während der Natriumcarbonat-Zugabe mittels eines Fördermittels 20, vorzugsweise eines Gurtförderers in Richtung eines Silos 18 transportiert, wobei der Sand nach der Natriumcarbonat-Zugabe auf dem Transportweg zu dem Silo 18 mindestens einmal, vorzugsweise mehrmals auf ein nachfolgendes Fördermittel 21, 22 abgeworfen wird.

In Fig. 1c ist skizziert, dass für den Transport von mit Calciumsulfat belastetem Sand S' von dem Entwässerungssieb 17 in Richtung des mindestens einen Silos 18 ein Gurtförderer 20 vorgesehen ist, auf dem der Sand S' während des Transports mit Natriumcarbonat (Soda) beaufschlagt wird. Das Natriumcarbonat wird hierzu vorzugsweise mittels einer Dosiereinrichtung (nicht gezeigt), beispielsweise einer frequenzgesteuerten Dosierschnecke, aus einem Vorratsspeicher (Vorlagenbehälter) 23 abgezogen und auf den auf dem Gurtförderer 20 liegenden Sand S' aufgegeben, beispielsweise aufgestreut. Für ein beschleunigtes Eindringen bzw. Einsickern des Natriumcarbonats in den Sand S' sieht eine bevorzugte Ausgestaltung des erfindungsgemäßen Verfahrens vor, dass dem Sand S' auf dem Transportweg zu dem Silo 18 während oder nach der Natriumcarbonat-Zugabe zusätzliches Wasser zugegeben wird, so. dass der Sand S' nach der Zugabe des zusätzlichen Wassers einen Wassergehalt im Bereich von 14 bis 20 %, vorzugsweise im Bereich von 16 bis 18 % aufweist. Die Zugabe des zusätzlichen Wassers erfolgt beispielsweise mittels einer Wassersprühvorrichtung.

Anstelle oder ergänzend zu der gewaschenen und gereinigten Sandfraktion kann auch die mittels des Entwässerungssiebes 50 und der Setzmaschine 11 abgetrennte Kiesfraktion K' mit Natriumcarbonat (Soda) behandelt werden. Dies ist in den Figuren 1b und 1c durch den mit F bezeichneten gestrichelten Pfeil skizziert.

Für den Transport des Sandes S' oder Bodens in den mindestens einen Silo 18 werden mehrere in Reihe angeordnete Gurtförderer 21, 22 genutzt, die auf die Abwurfstelle des Gurtförderers 20 folgen. Die Gurtförderer umfassen mindestens einen Steilgurtförderer 21, vorzugsweise einen Wellkanten-Gurtförderer. Der Wellkanten-Gurtförderer 21 ist derart ausgeführt, dass sein Fördergurt 21.1 mit einem maximalen Neigungswinkel im Bereich von 40° bis 90°, vorzugsweise im Bereich von 50° bis 80° gegenüber der Horizontalen ausgerichtet ist.

Der mit Calciumsulfat belastete und mit Natriumcarbonat beaufschlagte Sand S' oder Boden wird durch die freifallende Übergabe von einem Gurtförderer 20, 21 auf den nachfolgenden Gurtförderer 21, 22, insbesondere durch den Transport auf dem steil angeordneten Wellkanten-Gurtförderer 21, sowie durch den freifallenden Abwurf in den Silo 18 Umwälzungen und/oder Mischbewegungen unterworfen, die eine wirksame Vermischung des Calciumsulfats (CaSO₄) und Natriumcarbonats (Na₂CO₃) zur Erzielung einer möglichst vollständigen Umwandlung des Calciumsulfats in Natriumsulfat (Na₂SO₄) bewirken.

Der mit Natriumcarbonat behandelte Boden bzw. Sand S' wird in den Silo 18 eingebracht und dort bis zu einer vorgegebenen oder vorgebbaren Füllmenge gesammelt. Der Silo 18 hat eine untere Öffnung 18.1 mit Verschluss 18.2. Des Weiteren weist der Silo 18 eine Entwässerungseinrichtung auf, die mit einer Auffangeinrichtung zum Auffangen von mittels der Entwässerungseinrichtung abgetrenntem Spülwasser verbunden ist. Die Auffangeinrichtung kann beispielsweise einen unterhalb der Siloanlage angeordneten Auffangbehälter (Filtrat-Tank) aufweisen. Die Entwässerungsvorrichtung wird nachfolgend mit Bezug auf die Figuren 1c und 2 näher beschrieben. Der Silo 18 ist aus einem unteren, sich nach unten verjüngenden, vorzugsweise konischen Abschnitt 18.3, der die untere Öffnung 18.1 mit dem Verschluss 18.2 aufweist, und aus einem oberen Abschnitt 18.4, der einen zylindrischen, vorzugsweise kreiszylindrischen Querschnitt aufweist, aufgebaut.

Vorzugsweise wird der mit Natriumcarbonat behandelte Boden bzw. Sand S' in dem Silo 18 derart gesammelt wird, dass der gesammelte Boden oder Sand bei Erreichen der vorgegebenen oder vorgebbaren Füllmenge oberseitig einen Schüttkegel bildet. Nach Ablauf einer ausreichenden Einwirkzeit, während der sich Natriumsulfat gemäß der chemischen Reaktion CaSO₄ + Na₂CO₃ → CaCO₃ + Na₂SO₄ gebildet hat, wobei die Einwirkzeit beispielsweise 24 Stunden betragen kann, wird dem im Silo 18 gesammelten Boden bzw. Sand Spülwasser SP zugegeben. Die Spülwasserzugabe erfolgt beispielsweise mittels Schlauchleitung und Wasserverteilrohr von einer Förderbandbrücke oberhalb der Siloanlage.

Vorzugsweise wird das Spülwasser SP dem im Silo gesammelten Boden oder Sand in einer Menge und/oder mit einem Volumenstrom zugegeben, sodass sich zwischen der Innenseite des Silos 18 und dem Schüttkegel ein von oben zumindest temporär sichtbarer Spülwasserring bildet. Das Spülwasser SP durchläuft den im Silo 18 gesammelten Sand oder Boden langsam der Schwerkraft folgend von oben nach unten und löst dabei das Natriumsulfat aus der Bodenmatrix.

Zumindest ein Teil des Spülwassers mit darin gelöstem Natriumsulfat wird mittels der Entwässerungseinrichtung von dem im Silo 18 gesammelten Sand oder Boden abgetrennt und in die Auffangeinrichtung abgeleitet. Das im abgetrennten Spülwasser gelöste Sulfat des Natriumsulfats wird vorzugsweise durch Zugabe von Bariumchlorid (BaCl₂) oder Calciumchlorid (CaCl₂) gefällt und als Bariumsulfat bzw. Calciumsulfat vom Spülwasser (Filtrat) abgetrennt. Die Zugabe von Bariumchlorid oder Calciumchlorid erfolgt aus einem einer Filtratleitung 24 zugeordneten Vorlagenbehälter 25 mittels einer Dosiereinrichtung, beispielsweise einer Dosierschnecke. Nach dem Abtrennen des durch Fällung gebildeten Bariumsulfats bzw. Calciumsulfats aus dem Spülwasser (Filtrat) wird dieses in den Eindicker 14 geleitet.

Zum Entwässern des im Silo 18 mit Spülwasser SP gespülten Bodenmaterials wird ein im Wesentlichen ringförmiges, vorzugsweise konisches Sieb 30 verwendet, das in einem vertikalen Abstand von maximal 100 cm, vorzugsweise maximal 50 cm oberhalb der unteren Öffnung 18.1 des Silos 18 angeordnet ist. Das Sieb 30 ist beispielsweise nach Art eines Siebkorbes ausgebildet. Es weist eine Vielzahl länglicher, im Wesentlichen in Fließrichtung des Spülwassers verlaufender Schlitze 30.1 auf, die vorzugsweise in Form einer Schlitzbrückenstruktur ausgebildet sind.

Zudem werden zum Entwässern Filterrohre 31 verwendet, die im Inneren des Silos 18 eingebaut sind. Die Filterrohre 31 erstrecken sich oberhalb des Siebes 30 nach oben, vorzugsweise bis zum Übergang 18.5 des unteren konischen Abschnitts 18.3 zum oberen zylindrischen Abschnitt 18.4 des Silos 18. Mittels der Filterrohre 31 wird abgetrenntes Spülwasser zu einer auf der Außenseite des Silos 18 angeordneten Sammelleitung 32 abgeführt. Die Filterrohre 31 weisen dabei eine Vielzahl länglicher, im Wesentlichen parallel zu ihrer Rohrachse verlaufender Schlitze 31.1 auf, die vorzugsweise ebenfalls in Form einer Schlitzbrückenstruktur ausgebildet sind.

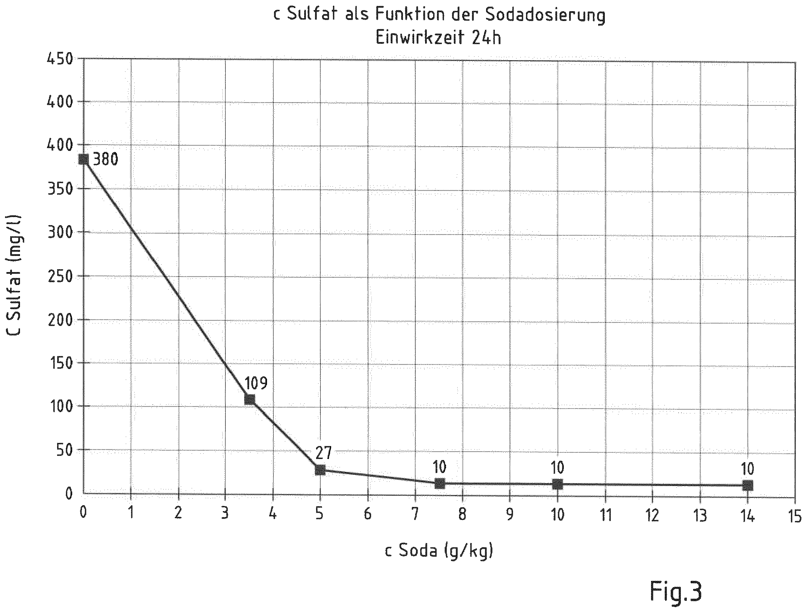

In Fig. 3 ist beispielhaft der Verlauf der Sulfat-Konzentration als Funktion der Sodadosierung dargestellt. Der unbehandelte Boden bzw. Sand S' weist eine Eluat-Konzentration von ca. 380 mg/l SO₄ ²⁻ auf. Bei der Zugabe von 0,35 % Soda sinkt dieser Wert bereits auf ca. 109 mg/l. Werden dagegen 0,5 % Soda zugegeben, beträgt die Sulfat-Konzentration lediglich noch ca. 27 mg/l; ab einer Zugabe von 0,75 % Soda liegt die Sulfat-Konzentration mit 10 mg/l praktisch unterhalb der analytischen Nachweisgrenze.

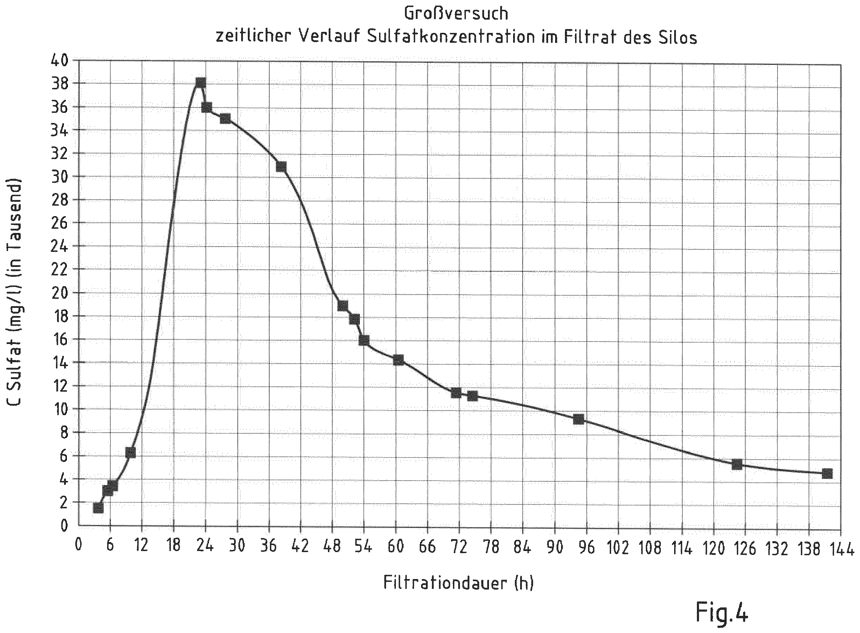

Die Fig. 4 zeigt den zeitlichen Verlauf der Sulfat-Konzentration im Filtratablauf des Silos 18 über die gesamte Versuchsdauer des oben erwähnten großtechnischen Versuchs seitens der Anmelderin. Nach 3 Stunden beträgt die SO₄ ²⁻Konzentration lediglich ca. 1.500 mg/l; hier liegt das Sulfat noch als schwerlösliches Calciumsulfat vor. Nach 10 Stunden wurden bereits 6.300 mg/l gemessen; nach 24 Stunden stieg die SO₄ ²⁻-Konzentration auf den Höchstwert von ca. 38.000 mg/l; nach 40 Stunden wurden noch 31.000 mg/l analysiert. Diese hohen Konzentrationen sind auf die chemische Umwandlung des Calciumsulfats zum leicht löslichen Natriumsulfat zurückzuführen. Nach einer Filtrationsdauer von 40 Stunden sinkt die SO₄ ²⁻-Konzentration schließlich kontinuierlich von 31.000 mg/l auf einen Endwert von 5.100 mg/l nach 142 Stunden ab.

Die lange Spül- und Filtrationsdauer von 142 Stunden lag bei dem durchgeführten Versuch insbesondere an einer klein dimensionierten Spülwasserleitung von der Bodenwaschanlage zu dem Wasserverteilrohr an der Förderbandbrücke oberhalb der Siloanlage. Mit der verwendeten Spülwasserleitung konnte zu dem Wasserverteilrohr nur ein Spülwasser-Volumenstrom von ca. 5 m³/h gefördert werden. Durch Verwendung einer größer dimensionierten Spülwasserleitung wären jedoch auch ein größerer Volumenstrom von beispielsweise ca. 10 m³/h und erheblich kürzere Spülzeiten möglich.

Der gespülte und entwässerte Sand oder Boden wird aus dem Silo 18 an dessen unterer Öffnung 18.1 entnommen. Der Verschluss 18.2 der Öffnung 18.1 ist hierzu beispielsweise als Schieber, vorzugsweise als Flachschieber ausgeführt, wobei der Verschluss 18.2 ein gegenüber der Horizontalen geneigtes Schieberblatt 18.21 aufweist, das in seiner Schließstellung an einer Abdichtung dichtend anliegt. Das Schieberblatt 18.21 ist entlang einer Führung 18.22 verschiebbar und mit einer Verzahnung 18.23, beispielsweise mindestens einer Zahnstange versehen, die mit einem von einem Motor M reversibel drehbaren Ritzel kämmt.

Im Wesentlichen oberhalb des Schieberblatts 18.21 ist ein Befestigungsrahmen 18.24 angeordnet, der mit einer zusätzlichen Entwässerungseinrichtung versehen ist. Die zusätzliche Entwässerungseinrichtung ist vorzugsweise an der tiefsten Stelle einer von der Abdichtung und dem Schieberblatt 18.21 in dessen Schließstellung begrenzten Gefällefläche angeordnet. Diese zusätzliche Entwässerungseinrichtung ist aus einem Entwässerungssieb (nicht gezeigt), einer Ablaufschurre (Ablaufschürze) 18.25 und einer Ablaufrinne 18.26 gebildet. Damit im Bereich des Schiebers abgetrenntes Spülwasser wird vorzugsweise ebenfalls in die Auffangeinrichtung abgeleitet, in die auch mittels des Siebes 30 und der Filterrohre 31 abgetrenntes Spülwasser abgeleitet wird.

Aus der Auffangeinrichtung, beispielsweise einem Auffangbehälter (Filtart-Tank) wird das gelöstes Natriumsulfat enthaltende Spülwasser in eine Prozesswasserreinigungsanlage geleitet und/oder gepumpt. Das dort gereinigte Spülwasser wird vorzugsweise zum Spülen des mit Natriumcarbonat behandelten Bodens und/oder zur Bodenwäsche weiterverwendet.

Unterhalb des Verschlusses 18.2 des Silos 18 ist ein Dosierförderband (Siloabzugsband) 33 montiert, mittels dem der gespülte und entwässerte Sand oder Boden an der unteren Öffnung 18.1 des Silos 18 entnommen werden kann. Dem Dosierförderband 33 ist vorzugsweise ein dreh- oder schwenkbar gelagerter Materialkontrollhebel 34 zugeordnet, mittels dem die Beladungshöhe des Dosierförderbandes 33 erfasst werden kann. Der Materialkontrollhebel 34 ist oberhalb des Dosierförderbandes 33, mit horizontalem Abstand zu der unteren Öffnung 18.1 des Silos, zwischen der Öffnung 18.1 und dem Abwurfende 33.1 des Dosierförderbandes 33 angeordnet.

Der Silo 18, vorzugsweise der untere Abschnitt 18.3 des Silos, ist an seiner Außenseite mit elektrisch betriebenen Vibratoren 35 versehen. Die Vibratoren 35 werden beispielsweise über eine Steuerung oder Regelung aktiviert, wenn bei gewollter Entnahme von gespültem und entwässertem Bodenmaterial aus der unteren Öffnung 18.1 des Silos eine zu geringe oder fehlende Beladungshöhe des Dosierförderbandes 33 mittels des Materialkontrollhebels 34 ermittelt wird, obwohl der Silo 33 mit entwässertem Bodenmaterial gefüllt ist oder noch eine Teilmenge solchen Bodenmaterials enthält. Die aktuelle Füllmenge im Silo 18 bzw. eine der aktuellen Füllmenge proportionale Messgröße kann mittels Gewichtssensoren, beispielsweise Wägezellen oder Dehnungsmessstreifen, und/oder mittels Abstandssensoren, insbesondere Ultraschallsensoren, und/oder mittels kapazitiver Sensoren ermittelt werden.

In den Figuren 1c und 2 ist lediglich ein einzelner Silo 18 gezeigt. Nach einer bevorzugten Ausgestaltung des erfindungsgemäßen Verfahrens werden zu dessen Ausführung jedoch mindestens zwei Silos verwendet, die jeweils dem in den Figuren 1c und 2 gezeigten Silo 18 entsprechen. Die Silos 18 werden dabei in der Weise verwendet, dass einer der Silos mit Boden, beispielsweise Sand, aus der Bodenwaschanlage, der mit Calciumsulfat belastet ist und mit Natriumcarbonat behandelt wurde, befüllt wird, während in einem anderen der Silos Natriumsulfat, das sich während einer Einwirkzeit in dem mit Natriumcarbonat behandelten Boden gebildet hat, durch Spülen und Entwässern des behandelten Bodens abgetrennt wird. Der oberhalb der Silos 18 angeordnete Gurtförderer 22 ist dabei mit einem reversierbaren Antrieb versehen, so dass die Laufrichtung des Fördergurtes 22.1 wahlweise geändert und der mit Calciumsulfat belastete und mit Natriumcarbonat behandelte Boden in den jeweiligen zu füllenden Silo 18 eingebracht werden kann.

## Patentansprüche

1. Verfahren zur Reinigung von mit Calciumsulfat belasteten Böden,
- bei dem mit Calciumsulfat belasteter Boden in einer Bodenwaschanlage behandelt und zumindest einem Teil des Bodens Natriumcarbonat zugegeben wird, und
- bei dem Natriumsulfat, das sich gemäß der chemischen Reaktion
CaSO₄ + Na₂CO₃ → CaCO₃ + Na₂SO₄
während einer Einwirkzeit gebildet hat, durch Spülen und Entwässern des mit Natriumcarbonat behandelten Bodens abgetrennt wird,
**dadurch gekennzeichnet, dass** der mit Natriumcarbonat behandelte Boden in mindestens einen schachtartigen, eine untere Öffnung (18.1) mit Verschluss (18.2) aufweisenden Speicher (18), vorzugsweise Silo (18), eingebracht und dort bis zu einer vorgegebenen oder vorgebbaren Füllmenge gesammelt wird, wobei der Speicher (18) eine Entwässerungseinrichtung (30, 31) aufweist, die mit einer Auffangeinrichtung zum Auffangen von mittels der Entwässerungseinrichtung (30, 31) abgetrenntem Spülwasser (SP) verbunden ist,
wobei dem mit Natriumcarbonat behandelten, im Speicher (18) gesammelten Boden Spülwasser (SP) zugegeben wird,
wobei zumindest ein Teil des Spülwassers (SP) mit darin gelöstem Natriumsulfat mittels der Entwässerungseinrichtung (30, 31) von dem im Speicher (18) gesammelten Boden abgetrennt und in die Auffangeinrichtung abgeleitet wird, und
wobei der gespülte und entwässerte Boden aus dem Speicher (18) an dessen unterer Öffnung (18.1) entnommen wird.

2. Verfahren nach Anspruch 1, **dadurch gekennzeichnet, dass** das Natriumcarbonat dem mit Calciumsulfat belasteten Boden oder dem Teil dieses Bodens im Wesentlichen in fester Form, vorzugsweise in Pulverform zugegeben wird, wobei die Natriumcarbonat-Zugabe erfolgt, nachdem der Boden in der Bodenwaschanlage gewaschen wurde, und wobei der Boden bei der Natriumcarbonat-Zugabe einen Wasser- oder Feuchtegehalt im Bereich von 10 bis 18 %, vorzugsweise im Bereich von 14 bis 16 % aufweist.

3. Verfahren nach Anspruch 1 oder 2, **dadurch gekennzeichnet, dass** der Boden während und/oder nach der Natriumcarbonat-Zugabe mittels eines Fördermittels (20), vorzugsweise eines Stetigförderers, besonders bevorzugt eines Gurtförderers transportiert wird, wobei der Boden nach der Natriumcarbonat-Zugabe auf dem Transportweg zu dem Speicher (18) mindestens einmal auf ein nachfolgendes Fördermittel (21, 22) übergeben, vorzugsweise abgeworfen wird.

4. Verfahren nach einem der Ansprüche 1 bis 3, **dadurch gekennzeichnet, dass** dem Boden, nachdem er in der Bodenwaschanlage gewaschen wurde, während oder nach der Natriumcarbonat-Zugabe auf dem Transportweg zu dem Speicher (18) zusätzliches Wasser zugegeben wird, so dass der Boden nach Zugabe des zusätzlichen Wassers einen Wassergehalt im Bereich von 14 bis 20 %, vorzugsweise im Bereich von 16 bis 18 % aufweist.

5. Verfahren nach einem der Ansprüche 1 bis 4, **dadurch gekennzeichnet, dass** der mit Natriumcarbonat behandelte Boden in dem mindestens einen Speicher (18) derart gesammelt wird, dass der gesammelte Boden bei Erreichen der vorgegebenen oder vorgebbaren Füllmenge oberseitig einen Schüttkegel bildet, und dass das Spülwasser (SP) dem in dem Speicher (18) gesammelten Boden in einer Menge und/oder mit einem Volumenstrom zugegeben wird, sodass sich zwischen der Innenseite des Speichers (18) und dem Schüttkegel ein von oben zumindest temporär sichtbarer Spülwasserring bildet.

6. Verfahren nach einem der Ansprüche 1 bis 5, **dadurch gekennzeichnet, dass** der Speicher (18) aus einem unteren, sich nach unten verjüngenden Abschnitt (18.3), der die untere Öffnung (18.1) mit dem Verschluss (18.2) aufweist, und aus einem oberen Abschnitt (18.4), der einen zylindrischen, vorzugsweise kreiszylindrischen Querschnitt aufweist, aufgebaut ist.

7. Verfahren nach einem der Ansprüche 1 bis 6, **dadurch gekennzeichnet, dass** zum Entwässern ein im Wesentlichen ringförmiges, vorzugsweise konisches oder zylindrisches Sieb (30) verwendet wird, das in einem vertikalen Abstand von maximal 100 cm, vorzugsweise maximal 50 cm oberhalb der unteren Öffnung (18.1) des Speichers (18) angeordnet ist.

8. Verfahren nach Anspruch 7, **dadurch gekennzeichnet, dass** das Sieb längliche, im Wesentlichen in Fließrichtung des Spülwassers (SP) verlaufende Schlitze (30.1) aufweist, wobei die Schlitze (30.1) vorzugsweise als Schlitzbrückenstruktur ausgebildet sind.

9. Verfahren nach einem der Ansprüche 1 bis 8, **dadurch gekennzeichnet, dass** zum Entwässern Filterrohre (31) verwendet werden, die im Inneren des Speichers (18) eingebaut sind, sich zumindest entlang eines Teilabschnitts des unteren Abschnitts (18.3) des Speichers (18) nach oben erstrecken, und abgetrenntes Spülwasser (SP) zu einer auf der Außenseite des Speichers (18) angeordnete Sammelleitung (32) abführen.

10. Verfahren nach Anspruch 9, **dadurch gekennzeichnet, dass** das jeweilige Filterrohr (31) längliche, im Wesentlichen parallel zur Rohrachse verlaufende Schlitze (31.1), vorzugsweise in Form einer Schlitzbrückenstruktur aufweist.

11. Verfahren nach einem der Ansprüche 1 bis 10, **dadurch gekennzeichnet, dass** der Verschluss (18.2) des Speichers (18) als Schieber, vorzugsweise als Flachschieber ausgeführt ist, wobei der Verschluss (18.2) ein gegenüber der Horizontalen geneigtes Schieberblatt (18.21) aufweist, das in seiner Schließstellung an einer Abdichtung dichtend anliegt, und wobei im Wesentlichen oberhalb des Schieberblatts (18.21) ein Befestigungsrahmen (18.24) mit einer zusätzlichen Entwässerungseinrichtung angeordnet ist, wobei die zusätzliche Entwässerungseinrichtung vorzugsweise an der tiefsten Stelle einer von der Abdichtung und dem Schieberblatt (18.21) in dessen Schließstellung begrenzten Gefällefläche angeordnet ist.

12. Verfahren nach einem der Ansprüche 1 bis 11, **dadurch gekennzeichnet, dass** der gespülte und entwässerte Boden an der unteren Öffnung (18.1) des Speichers (18) mittels eines Dosierförderbandes (33) entnommen wird.

13. Verfahren nach einem der Ansprüche 1 bis 12, **dadurch gekennzeichnet, dass** das gelöstes Natriumsulfat enthaltende Spülwasser aus der Auffangeinrichtung in eine Prozesswasserreinigungsanlage geleitet und/oder gepumpt und das dort gereinigte Spülwasser in dem Verfahren, vorzugsweise zum Spülen des mit Natriumcarbonat behandelten Bodens und/oder zur Bodenwäsche weiter verwendet wird.

14. Verfahren nach einem der Ansprüche 1 bis 13, **dadurch gekennzeichnet, dass** das im Spülwasser gelöste Sulfat des Natriumsulfats durch Zugabe von Bariumchlorid oder Calciumchlorid gefällt und als Bariumsulfat oder Calciumsulfat vom Spülwasser abgetrennt wird.

15. Verfahren nach einem der Ansprüche 1 bis 14, **dadurch gekennzeichnet, dass** mindestens zwei Speicher (18) verwendet werden, die jeweils dem besagten mindestens einen Speicher (18) entsprechen, wobei die Speicher (18) in der Weise verwendet werden, dass einer der Speicher (18) mit Boden aus der Bodenwaschanlage, der mit Calciumsulfat belastet ist und mit Natriumcarbonat behandelt wurde, befüllt wird, während in einem anderen der Speicher (18) Natriumsulfat, das sich während einer Einwirkzeit in dem mit Natriumcarbonat behandelten Boden gebildet hat, durch Spülen und Entwässern des behandelten Bodens abgetrennt wird.

## Claims

1. Method for cleaning soil contaminated with calcium sulfate,
- in which soil contaminated with calcium sulfate is treated in a soil washing plant and sodium carbonate is added to at least part of the soil, and
- in which sodium sulfate, which is formed according to the chemical reaction
CaSO₄ + Na₂CO₃ → CaCO₃ + Na₂SO₄
formed during an exposure time, is separated by rinsing and dewatering the sodium carbonate-treated soil,
**characterized in that** the sodium carbonate-treated soil is introduced into at least one shaft-like storage (18), preferably silo (18), having a lower opening (18.1) with closure (18.2), and is collected there up to a predetermined or predeterminable filling quantity, wherein the storage (18) has a dewatering device (30, 31) which is connected to a collecting device for collecting rinsing water (SP) separated by means of the dewatering device (30, 31),
wherein rinsing water (SP) is added to the sodium carbonate-treated soil collected in the storage (18),
wherein at least a part of the rinsing water (SP) with sodium sulfate dissolved therein is separated from the soil collected in the storage (18) by means of the dewatering means (30, 31) and discharged into the collecting device, and
wherein the rinsed and dewatered soil is removed from the storage (18) at the lower opening (18.1) thereof.

2. Method according to claim 1, **characterized in that** the sodium carbonate is added to the soil contaminated with calcium sulfate or to the part of this soil substantially in solid form, preferably in powder form, wherein the sodium carbonate addition takes place after the soil has been washed in the soil washing plant, and wherein the soil has a water or moisture content in the range of 10 to 18%, preferably in the range of 14 to 16%, when the sodium carbonate is added.

3. Method according to claim 1 or 2, **characterized in that** the soil is transported during and/or after the sodium carbonate addition by means of a conveying means (20), preferably a continuous conveyor, particularly preferably a belt conveyor, wherein after the sodium carbonate addition the soil is transferred, preferably discharged, at least once on the transport path to the storage (18) onto a subsequent conveying means (21, 22).

4. Method according to any one of claims 1 to 3, **characterized in that** additional water is added to the soil, after it has been washed in the soil washing plant, during or after the sodium carbonate addition on the transport path to the storage (18), so that the soil, after addition of the additional water, has a water content in the range from 14 to 20%, preferably in the range from 16 to 18%.

5. Method according to any one of claims 1 to 4, **characterized in that** the sodium carbonate-treated soil is collected in the at least one storage (18) in such a way that, when the predetermined or predeterminable filling quantity is reached, the collected soil forms a dump cone at the top, and **in that** the rinsing water (SP) is added to the soil collected in the storage (18) in a quantity and/or with a volumetric flow rate such that a ring of rinsing water visible at least temporarily from above is formed between the inside of the storage (18) and the dump cone.

6. Method according to any one of claims 1 to 5, **characterized in that** the storage (18) is constructed from a lower, downwardly tapering section (18.3), which has the lower opening (18.1) with the closure (18.2), and from an upper section (18.4), which has a cylindrical, preferably circular-cylindrical cross section.

7. Method according to any one of claims 1 to 6, **characterized in that** a substantially annular, preferably conical or cylindrical screen (30) is used for dewatering, which screen is arranged at a vertical distance of at most 100 cm, preferably at most 50 cm, above the lower opening (18.1) of the storage (18).

8. Method according to claim 7, **characterized in that** the screen has elongated slots (30.1) running essentially in the direction of flow of the rinsing water (SP), the slots (30.1) preferably being designed as a slot bridge structure.

9. Method according to any one of claims 1 to 8, **characterized in that** screen pipes (31) are used for dewatering, which screen pipes (31) are installed inside the storage (18), extend upwardly at least along a partial section of the lower section (18.3) of the storage (18), and discharge separated rinsing water (SP) to a collecting pipe (32) arranged on the outside of the storage (18).

10. Method according to claim 9, **characterized in that** the respective screen pipe (31) has elongated slots (31.1) extending substantially parallel to the pipe axis, preferably in the form of a slot bridge structure.

11. Method according to any one of claims 1 to 10, **characterized in that** the closure (18.2) of the storage (18) is designed as a slide valve, preferably as a flat slide valve, the closure (18.2) having a slide valve blade (18.21) which is inclined with respect to the horizontal and, in its closed position, bears in a sealing manner against a seal, and, essentially above the slide valve blade (18. 21), a fastening frame (18.24) with an additional dewatering device being arranged, the additional dewatering device preferably being arranged at the deepest point of a sloping surface bounded by the seal and the slide valve blade (18.21) in its closed position.

12. Method according to any one of claims 1 to 11, **characterized in that** the rinsed and dewatered soil is removed at the lower opening (18.1) of the storage (18) by means of a belt feeder (33).

13. Method according to any one of claims 1 to 12, **characterized in that** the rinsing water containing dissolved sodium sulfate is conducted and/or pumped from the collection device into a process water purification plant and the rinsing water purified there is further used in the process, preferably for rinsing the sodium carbomate-treated soil and/or for soil washing.

14. Method according to any one of claims 1 to 13, **characterized in that** the sulfate of sodium sulfate dissolved in the rinsing water is precipitated by adding barium chloride or calcium chloride and separated from the rinsing water as barium sulfate or calcium sulfate.

15. Method according to any one of claims 1 to 14, **characterized in that** at least two storages (18) are used, each corresponding to said at least one storage (18), wherein the storages (18) are used in such a way that one of the storages (18) is filled with soil from the soil washing plant, which is contaminated with calcium sulfate and has been treated with sodium carbonate, while in another of the storages (18) sodium sulfate formed during an exposure time in the soil treated with sodium carbonate is separated by rinsing and dewatering the treated soil.

## Revendications

1. Procédé de dépollution de sols contaminés par du sulfate de calcium, dans lequel
- un sol contaminé par du sulfate de calcium est traité dans une installation de lavage de sols, et du carbonate de sodium est ajouté à au moins une partie dudit sol, et
- du sulfate de sodium qui s'est formé selon la réaction chimique
CaSO₄ + Na₂CO₃ --> CaCO₃ + Na₂SO₄
pendant une durée d'action, est séparé en rinçant et drainant le sol traité au carbonate de sodium,
**caractérisé en ce que** le sol traité au carbonate de sodium est introduit dans au moins un réservoir (18) ressemblant à un puits, s'agissant préférentiellement d'un silo (18), lequel comporte une ouverture inférieure (18.1) dotée d'un organe de fermeture (18.2), pour y être amassé jusqu'à atteindre un niveau de remplissage prédéfini ou pouvant être défini au préalable, le réservoir (18) comportant un dispositif de drainage (30, 31) qui est relié à un dispositif de réception destiné à recueillir l'eau de rinçage (SP) qui vient d'être séparée au moyen du dispositif de drainage (30, 31), de l'eau de rinçage (SP) étant ajoutée au sol traité au carbonate de sodium et amassé dans le réservoir (18),
au moins une partie de l'eau de rinçage (SP), dans laquelle du sulfate de sodium est dissous, étant séparée par le dispositif de drainage (30, 31) du sol amassé dans le réservoir (18) puis évacuée dans le dispositif de réception, et
le sol rincé et drainé étant retiré du réservoir (18) au niveau de l'ouverture inférieure (18.1) de ce dernier.

2. Procédé selon la revendication 1, **caractérisé en ce que** le carbonate de sodium est ajouté au sol contaminé par du sulfate de calcium, ou à une partie de ce sol, sous une forme sensiblement solide, de préférence sous une forme pulvérulente, l'ajout de carbonate de sodium étant réalisé après avoir lavé ledit sol dans ladite installation de lavage de sols, et ledit sol présentant, lors de l'ajout du carbonate de sodium, une teneur en eau ou en humidité comprise entre 10 et 18 %, préférentiellement comprise entre 14 et 16 %.

3. Procédé selon les revendications 1 ou 2, **caractérisé en ce que**, pendant et/ou après l'ajout du carbonate de sodium, le sol est transporté à l'aide d'un moyen de transport (20), s'agissant préférentiellement d'un moyen de transport continu, notamment d'une bande transporteuse, le sol étant relayé lors de son parcours de transport, après l'ajout du carbonate de sodium et avant d'atteindre le réservoir (18), au moins une fois à un moyen de transport (21, 22) assurant la suite, de préférence en le faisant tomber sur ce dernier.

4. Procédé selon l'une des revendications 1 à 3, **caractérisé en ce que** sur le parcours de transport vers le réservoir (18) on ajoute de l'eau supplémentaire audit sol, après que ce dernier a été lavé dans l'installation de lavage de sol et pendant ou après l'ajout de carbonate de sodium, faisant en sorte qu'après l'ajout d'eau supplémentaire, ledit sol présente une teneur en eau comprise entre 14 et 20 %, de préférence comprise entre 16 et 18 %.

5. Procédé selon l'une des revendications 1 à 4, **caractérisé en ce que** le sol traité au carbonate de sodium est amassé dans l'au moins un réservoir (18) de manière à ce que le sol amassé forme, lorsque le niveau de remplissage prédéfini ou pouvant être défini au préalable est atteint, un empilement conique à son extrémité supérieure, et que l'eau de rinçage (SP) est ajoutée au sol amassé au sein du réservoir (18) dans une quantité et/ou avec un débit volumique faisant en sorte qu'un anneau d'eau de rinçage, qui est au moins temporairement visible depuis le haut, se forme entre la face intérieure du réservoir (18) et ledit empilement conique.

6. Procédé selon l'une des revendications 1 à 5, **caractérisé en ce que** le réservoir (18) est configuré d'une partie inférieure (18.3) qui s'amenuise vers le bas et présente l'ouverture inférieure (18.1) comportant l'organe de fermeture (18.2) et d'une partie supérieure (18.4) présentant une coupe transversale cylindrique, de préférence cylindrique circulaire.

7. Procédé selon l'une des revendications 1 à 6, **caractérisé en ce que** l'on utilise, pour réaliser le drainage, un tamis (30) sensiblement annulaire, de préférence conique ou cylindrique, qui est disposé à une distance verticale inférieure ou égale à 100 cm, préférentiellement inférieure ou égale à 50 cm, au-dessus de l'ouverture inférieure (18.1) du réservoir (18).

8. Procédé selon la revendication 7, **caractérisé en ce que** ledit tamis présente des fentes oblongues qui s'étendent sensiblement dans le sens d'écoulement de l'eau de rinçage (SP), les fentes (30.1) étant préférentiellement réalisées de manière à former une structure de type perforation à pontets.

9. Procédé selon l'une des revendications 1 à 8, **caractérisé en ce que** l'on utilise des tuyaux filtrants (31) pour réaliser le drainage, lesquels sont installés à l'intérieur du réservoir (18), s'étendant vers le haut le long d'au moins une section partielle de la partie inférieure (18.3) du réservoir (18) , pour ainsi évacuer l'eau de rinçage (SP), qui vient d'être séparée, vers un conduit collecteur (32) disposé sur la face extérieure du réservoir (18).

10. Procédé selon la revendication 9, **caractérisé en ce que** chacun des tuyaux filtrants (31) présente des fentes (31.1) oblongues qui s'étendent sensiblement dans un sens parallèle à l'axe du tuyau, de préférence sous forme d'une structure de type perforation à pontets.

11. Procédé selon l'une des revendications 1 à 10, **caractérisé en ce que** l'organe de fermeture (18.2) du réservoir (18) est réalisé sous forme d'une vanne, s'agissant préférentiellement d'une vanne plate, l'organe de fermeture (18.2) comportant un obturateur plat (18.21) qui est incliné par rapport à l'horizontale et qui, dans sa position de fermeture, fait l'étanchéité en épousant un joint, et un cadre de support (18.24) comportant un dispositif de drainage supplémentaire qui est disposé au-dessus de l'obturateur plat (18.21), le dispositif de drainage supplémentaire étant préférentiellement disposé à l'endroit le plus bas d'une surface en pente qui est délimitée, dans la position de fermeture de l'obturateur plat (18.21), par ce dernier et par ledit joint.

12. Procédé selon l'une des revendications 1 à 11, **caractérisé en ce que** le sol rincé et drainé est retiré, à l'aide d'un bande transporteuse de dosage (33), au niveau de l'ouverture inférieure (18.1) du réservoir (18).

13. Procédé selon l'une des revendications 1 à 12, **caractérisé en ce que** l'on faire passer, optionnellement à l'aide de pompes, l'eau de rinçage contenant du sulfate de sodium depuis ledit dispositif de réception dans une installation de purification d'eaux de processus, pour ensuite réutiliser l'eau de rinçage y ayant été purifiée dans ledit procédé, de préférence pour rincer le sol traité au carbonate de sodium et/ou pour le lavage de sols,

14. Procédé selon l'une des revendications 1 à 13, **caractérisé en ce que** le sulfate, issu du sulfate de sodium, dissous dans l'eau de rinçage, est séparé de l'eau de rinçage sous forme de sulfate de baryum ou de sulfate de calcium après avoir mis en oeuvre une précipitation par ajout de chlorure de baryum ou de chlorure de calcium.

15. Procédé selon l'une des revendications 1 à 14, **caractérisé en ce que** l'on utilise au moins deux réservoirs (18) dont chacun correspond audit au moins un réservoir (18), les réservoirs (18) étant utilisés de manière à ce que l'on remplisse l'un des réservoirs (18) avec du sol qui est issu de l'installation de lavage de sols et qui est contaminé par du sulfate de calcium et vient d'être traité au carbonate de sodium, alors que dans un autre des réservoirs (18), on procède à la séparation du sulfate de sodium qui s'est formé pendant une durée d'action au sein du sol traité au carbonate de sodium, en soumettant ledit sol ainsi traité à un rinçage et drainage.
